# EUROPÄISCHE PATENTANMELDUNG

(11) **EP 1 431 128 A1**
(43) Veröffentlichungstag der Anmeldung: **23.06.2004**
(21) Anmeldenummer: 03013115.5
(22) Anmeldetag: 11.06.2003
(51) Int. Cl.: B60R 16/02, B62D 5/04

(54) **Steer-by-Wire-Lenkvorrichtung und Verfahren zum Übertragen von Informationssignalen oder von elektrischer Leistung**

(30) Priorität: 17.12.2002 DE 10258871
(71) Anmelder: ROBERT BOSCH GMBH, 70442 Stuttgart (DE)
(72) Erfinder: Gustmann, Martin, 71701 Schwieberdingen (DE); Kazmierczak, Harald, 71717 Beilstein (DE)

(57) **Zusammenfassung**

Die Erfindung betrifft eine Steer-by-Wire-Lenkvorrichtung (100). Zum Austauschen von Informationen und zum Übertragen von elektrischer Leistung zwischen einer Einrichtung für Sonderfunktionen (112) in dem Lenkrad und einem Steuergerät (140) des Fahrzeugs umfassen bekannte Lenkvorrichtungen dieser Art eine an die Drehbewegung der Lenksäule (120) angepasste Übertragungseinrichtung (122). Bei der Einrichtung (112) handelt es sich zum Beispiel um einen Airbag oder eine Bedieneinrichtung für ein Radio oder einen Tempomat. Um die Kosten für eine derartige separate Übertragungseinrichtung einzusparen, wird erfindungsgemäß vorgeschlagen, den ohnehin bei Steer-by-Wire-Lenkvorrichtungen vorhandenen Rückkopplungs-Elektromotor (130) als eine solche Übertragungseinrichtung (122) zu verwenden.

## Beschreibung

Die Erfindung betrifft eine Steer-by-Wire-Lenkvorrichtung und ein Verfahren zum Lenken eines Fahrzeugs, insbesondere eines Kraftfahrzeugs.

### Stand der Technik

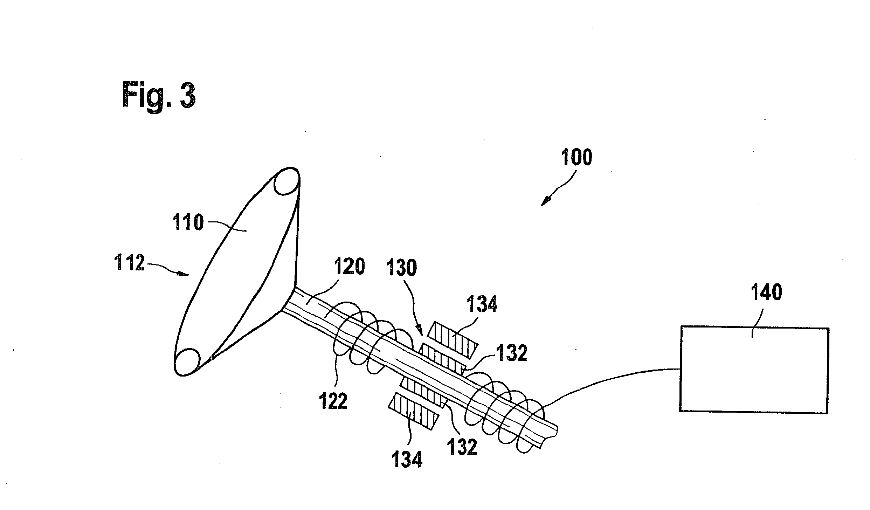

Derartige Vorrichtungen und Verfahren sind im Stand der Technik grundsätzlich bekannt. Ein Beispiel für den Aufbau einer derartigen bekannten Steer-by-Wire-Lenkvorrichtung ist in Figur 3 gezeigt und wird nachfolgend näher erläutert.

In Figur 3 ist zu erkennen, dass die Steer-by-Wire-Lenkvorrichtung 100 ein Lenkrad 110 aufweist, das mit einer Lenksäule 120 verbunden ist. Darüber hinaus weist die Lenkvorrichtung einen Rückkopplungs-Elektromotor 130 auf, der die Aufgabe hat, durch Erzeugen einer Gegenkraft an der Lenksäule dem Fahrer ein Fahrgefühl zu vermitteln; dies ist deswegen erforderlich, weil bei Steer-by-Wire-Systemen keine Verbindung zwischen der Lenksäule und den Rädern des Fahrzeugs besteht, sondern ein Lenkbefehl mittels Sensoren an der Lenksäule aufgenommen, verstärkt und mit Hilfe von Stellmotoren an die Räder weitergegeben wird. Der Rückkopplungs-Elektromotor 130 ist typischerweise kollektorlos als Synchronmotor ausgebildet und wird mit einer für seinen Betrieb erforderlichen Wechselspannung angesteuert, die von einem Pulswechselrichter aus der Batteriespannung des Fahrzeugs erzeugt wird. Um die besagte Gegenkraft auf die Lenksäule 120 zu übertragen, umschließt der Rotor 132 des Rückkopplungs-Elektromotors 130 die Lenksäule 120 drehfest. Der Stator 134 des Rückkopplungs-Elektromotors 130 ist typischerweise mit dem Chassis des Fahrzeugs verbunden und steht mit dem Rotor 132 in elektro-magnetischer Wechselwirkung.

Bei modernen Fahrzeugen, insbesondere Kraftfahrzeugen, weist das Lenkrad 110 in der Regel mindestens eine Einrichtung für Sonderfunktionen 112 auf. Bei dieser Einrichtung handelt es sich zum Beispiel um einen Airbag oder um eine Bedieneinrichtung für zum Beispiel ein Radio, einen Tempomat oder für eine Hupe. Im Falle einer Ausbildung als Airbag ist diese Einrichtung passiv ausgelegt und wird von einem Steuergerät 140 gegebenenfalls aktiviert; das heißt, es findet insbesondere eine Übertragung von Informationen von dem Steuergerät 140 zu der Einrichtung 112 statt. Anders ist die Sachlage, wenn die Einrichtung 112 als Bedieneinrichtung ausgebildet ist. In diesen Fällen ist die Einrichtung 112 aktiv ausgebildet und es werden insbesondere bei einer Bedienung dieser Einrichtung Informationen von der Einrichtung 112 zu dem Steuergerät 140 übertragen. Je nach Ausbildung der Einrichtung 112 kann auch eine bidirektionale Übertragung von Informationssignalen erforderlich sein. Weiterhin ist es von der Ausbildung der Einrichtung 112 abhängig, ob gegebenenfalls neben einer Übertragung von Informationen auch eine Übertragung elektrischer Leistung an diese Einrichtung erforderlich ist.

Die Übertragung von Informationen oder von elektrischer Leistung an die Einrichtung für Sonderfunktionen 112 in dem Lenkrad 110 ist grundsätzlich deswegen problematisch, weil das Lenkrad nicht fest montiert ist, sondern regelmäßig Drehbewegungen ausführt. Für die Übertragung der Informationen oder der Leistung ist deshalb eine die Drehbewegung der Lenksäule 120 berücksichtigende Übertragungseinrichtung 122 erforderlich. Traditionell besteht diese Übertragungseinrichtung in einer sogenannten Wickelfeder. Wickelfedern sind jedoch separate Bauelemente, die nicht nur Geld kosten, sondern deren Einbau auch mit zeitlichem Aufwand verbunden ist.

Ausgehend von diesem Stand der Technik ist es die Aufgabe der Erfindung, eine bekannte Steer-by-Wire-Lenkvorrichtung und ein entsprechendes Verfahren zum Lenken eines Fahrzeugs derart weiterzubilden, dass eine separate Übertragungseinrichtung zur Übertragung von Informationen und/oder elektrischer Leistung an eine oder von einer Einrichtung für Sonderfunktionen in dem Lenkrad des Fahrzeugs entbehrlich wird.

Diese Aufgabe wird durch den Gegenstand des Patentanspruchs 1 gelöst. Demnach besteht die Lösung insbesondere darin, dass bei einer bekannten Steer-by-Wire-Lenkvorrichtung der Rückkopplungs-Elektromotor auch als die Übertragungseinrichtung für den Austausch der Informationssignale und/oder die elektrische Leistungsübertragung ausgebildet ist.

### Vorteile der Erfindung

Vorteilhafterweise kann durch diese beanspruchte Verwendung des Rückkopplungs-Elektromotors eine separate Übertragungseinrichtung für den Austausch der Informationssignale und/oder die elektrische Leistungsübertragung entfallen. Dies spart Kosten und zeitlichen Montageaufwand.

Für eine unidirektionale Übertragung von Informationssignalen von dem Steuergerät an die Einrichtung für Sonderfunktionen ist es erforderlich, eine Modulationseinrichtung auf der Statorseite des Rückkopplungs-Elektromotors vorzusehen. Vorteilhafterweise moduliert diese Modulationseinrichtung die Informationssignale auf eine elektrische Eingangsspannung, insbesondere die Versorgungsspannung für den Rückkopplungs-Elektromotor auf. Auf der Rotorseite muss dann eine Demodulationseinrichtung vorgesehen sein, welche die Informationssignale nach ihrer Übertragung von dem Rotor abgreift, demoduliert und an die Einrichtung für Sonderfunktionen weiterleitet.

Für den Fall einer unidirektionalen Übertragung von der Einrichtung für Sonderfunktionen an das Steuergerät ist eine Modulationseinrichtung auf der Rotorseite und eine Demodulatoreinrichtung auf der Statorseite des Rückkopplungs-Elektromotors erforderlich.

Vorteilhafterweise kann auch die für den Betrieb der Einrichtung für Sonderfunktionen erforderliche elektrische Leistung über den Rückkopplungs-Elektromotor übertragen werden.

Für eine bidirektionale Informationsübertragung ist es erforderlich, dass sowohl auf der Stator- wie auch auf der Rotorseite des Rückkopplungs-Elektromotors jeweils sowohl eine Modulationseinrichtung wie auch eine Demodulationseinrichtung vorgesehen ist.

### Zeichnungen

Der Beschreibung sind drei Figuren beigefügt, wobei
- Figur 1: ein erstes Ausführungsbeispiel der erfindungsgemäßen Steer-by-Wire-Lenkvorrichtung;
- Figur 2: ein zweites Ausführungsbeispiel der erfindungsgemäßen Steer-by-Wire-Lenkvorrichtung; und
- Figur 3: eine Steer-by-Wire-Lenkvorrichtung gemäß dem Stand der Technik
zeigt.

### Beschreibung von Ausführungsbeispielen

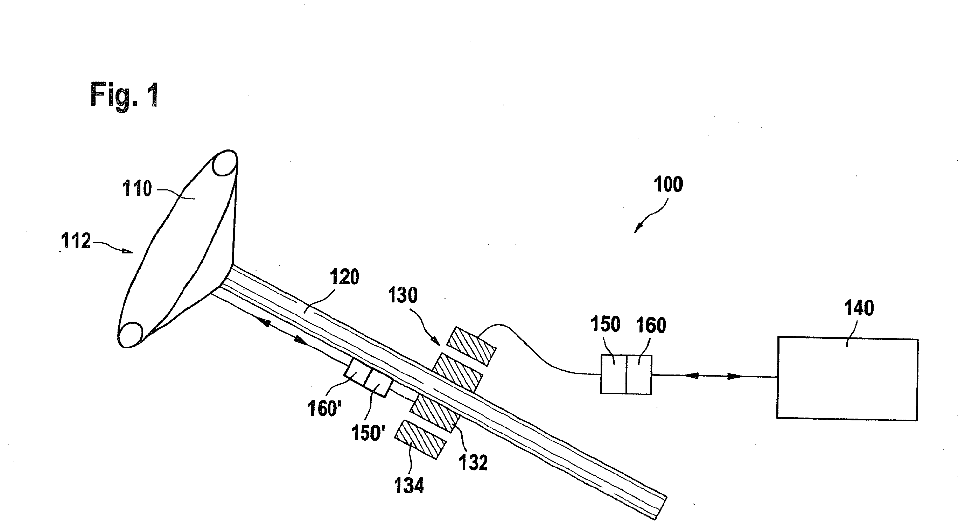

Figur 1 zeigt eine Steer-by-Wire-Lenkvorrichtung 100 gemäß der Erfindung zum Lenken eines Fahrzeugs, insbesondere eines Kraftfahrzeugs. Der grundsätzliche Aufbau und die grundsätzliche Funktionsweise der Lenkvorrichtung gemäß Figur 1 sind identisch mit der oben unter Bezugnahme auf Figur 3 beschriebenen Lenkvorrichtung. Gleiche Komponenten werden mit gleichen Bezugszeichen bezeichnet.

Der wesentliche Unterschied zwischen der Steer-by-Wire-Lenkvorrichtung 100 gemäß Figur 1 und der aus dem Stand der Technik bekannten Lenkvorrichtung gemäß Figur 3 besteht darin, dass die erfindungsgemäße Lenkvorrichtung 100 keine separate Übertragungseinrichtung zum Übertragen von Informationssignalen oder elektrischer Leistung aufweist. Vielmehr wird diese Funktion erfindungsgemäß durch den Rückkopplungs-Elektromotor 130 übernommen.

Für eine unidirektionale Übertragung von Informationssignalen von dem Steuergerät 140 an die Einrichtung für Sonderfunktionen 112 in dem Lenkrad 110 weist die erfindungsgemäße Lenkvorrichtung eine Modulationseinrichtung 150 auf der Statorseite des Rückkopplungs-Elektromotors 130 auf. Diese Modulationseinrichtung 150 hat die Aufgabe, die von dem Steuergerät 140 kommenden Informationssignale auf eine Eingangsspannung, insbesondere auf die Versorgungsspannung für den Rückkopplungs-Elektromotor 130 aufzumodulieren. Auf der Rotorseite des Rückkopplungs-Elektromotors befindet sich eine Demodulationseinrichtung 160' zum Abgreifen der übertragenen Informationssignale von dem Rotor 132 des Rückkopplungs-Elektromotors 130 und zum Demodulieren dieser Signale, bevor sie an die Einrichtung für Sonderfunktionen 112 übertragen werden.

Für eine umgekehrte unidirektionale Übertragung von Informationen, das heißt für eine Übertragung von Informationen von der Einrichtung für Sonderfunktionen 112 an das Steuergerät 140 ist es erforderlich, dass auf der Rotorseite des Rückkopplungs-Elektromotors 130 eine Modulationseinrichtung 150' zum Modulieren der Informationssignale auf die Rotorspannung und auf der Statorseite eine Demodulationseinrichtung 160 zum Demodulieren dieser Informationssignale nach ihrer Übertragung über den Elektromotor 130.

Für eine bidirektionale Übertragung ist es erforderlich, dass sowohl auf der Stator- wie auch auf der Rotorseite sowohl eine Modulationseinrichtung (150, 150') wie auch eine Demodulationseinrichtung (160, 160') vorgesehen ist.

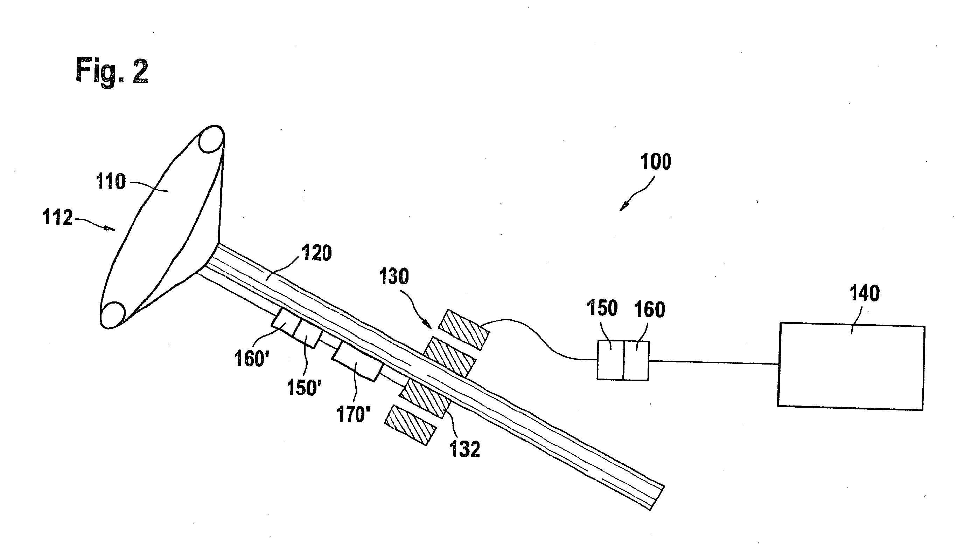

Figur 2 zeigt ein zweites Ausführungsbeispiel der Erfindung, welches neben einer Informationsübertragung eine Übertragung von elektrischer Leistung an die Einrichtung für Sonderfunktionen 112 ermöglicht. Voraussetzung für eine solche Leistungsübertragung ist grundsätzlich, dass auf der Statorseite mehr elektrische Leistung eingespeist wird, als für den Betrieb des Rückkopplungs-Elektromotors 130 alleine erforderlich wäre. Es muss insbesondere so viel Energie mehr übertragen werden, wie für den Betrieb der Einrichtung für Sonderfunktionen 112 erforderlich ist. Für die Übertragung dieser zusätzlichen Energie ist es erforderlich, dass der Rückkopplungs-Elektromotor entsprechend größer ausgelegt wird. Auf der Rotorseite des Rückkopplungs-Elektromotors 130 ist dann eine Leistungsversorgungseinrichtung 170' vorzusehen, welche ausgebildet ist, die zusätzlich über den Elektromotor 130 übertragene Leistung von einer Wicklung von dessen Rotor 132 abzugreifen und an die Einrichtung 112 weiterzuleiten. Ein Rotor ohne Wicklung, wie zum Beispiel ein Käfigläufer oder Permanentmagnet, ist für einen solchen Abgriff der Rotorspannung nicht geeignet. Derartige Rotoren sind dann entweder durch Rotoren mit Wicklungen zu ersetzen oder durch eine zusätzliche Wicklung zu ergänzen.

## Patentansprüche

1. Steer-by-wire Lenkvorrichtung (100) zum Lenken eines Fahrzeugs, insbesondere eines Kraftfahrzeugs, umfassend ein Lenkrad (110), das mit einer Lenksäule (120) verbunden ist und das mindestens eine Einrichtung für Sonderfunktionen (112) aufweist, wobei die Einrichtung (112) zwecks Austausch von Informationssignalen und/oder zwecks elektrischer Leistungsübertragung über eine an die Drehbewegung der Lenksäule (120) angepasste Überragungseinrichtung (122) mit einem Steuergerät (140) des Fahrzeugs verbunden ist; und
einen Rückkopplungs-Elektromotor (130) zum Erzeugen eines Lenkgefühls für den Fahrer mit einem Rotor (132), der die Lenksäule (120) drehfest umschließt, und mit einem Stator (134) der mit dem Rotor (132) in elektro-magnetischer Wechselwirkung steht;
**dadurch gekennzeichnet, dass**
der Rückkopplungs-Elektromotor (130) auch als die Übertragungseinrichtung (122) für den Austausch der Informationssignale und/oder die elektrische Leistungsübertragung ausgebildet ist.

2. Steer-by-wire Lenkvorrichtung nach Anspruch 1, **gekennzeichnet durch** eine Modulationseinrichtung (150) auf der Statorseite zum Aufmodulieren der Informationssignale, die von dem Steuergerät (140) an die Einrichtung für Sonderfunktionen (112) übertragen werden sollen, auf eine elektrische Eingangsspannung, insbesondere Versorgungsspannung, für den Rückkopplungs-Elektromotor (130) und eine Demodulationseinrichtung (160') auf der Rotorseite zum Demodulieren der Informationssignale nach deren Übertragung über den Rückkopplungs-Elektromotor.

3. Steer-by-wire Lenkvorrichtung nach Anspruch 1 oder 2, **gekennzeichnet durch** eine Modulationseinrichtung (150') auf der Rotorseite zum Aufmodulieren der Informationssignale, die von der Einrichtung für Sonderfunktionen (112) an das Steuergerät (140) übertragen werden sollen, auf eine elektrische Rotorspannung des Rückkopplungs-Elektromotors (130) und eine Demodulationseinrichtung (160) auf der Statorseite zum Demodulieren der Informationssignale nach deren Übertragung über den Rückkopplungs-Elektromotor (130).

4. Steer-by-wire Lenkvorrichtung (100) nach einem der vorangegangenen Ansprüche, **gekennzeichnet durch** eine Leistungsversorgungseinrichtung (170') auf der Rotorseite des Rückkopplungs-Elektromotors (130), welche ausgebildet ist, zum Abgreifen einer Versorgungsspannung für die Einrichtung für Sonderfunktionen (112) von einer Wicklung des Rotors (132).

5. Verfahren zum Austauschen von Informationssignalen und/oder zum Übertragen von elektrischer Leistung zwischen einer Einrichtung für Sonderfunktionen (112) eines Lenkrades (110) und einem Steuergerät (140) eines Fahrzeugs mit einer Steer-by-wire Lenkvorrichtung (100), **dadurch gekennzeichnet, dass** die Informationssignale und/oder die elektrische Leistung über einen Rückkopplungs-Elektromotor (130) der Steer-by-wire Lenkvorrichtung (100) übertragen werden.
